# EUROPÄISCHE PATENTSCHRIFT

(11) **EP 3 914 900 B1**
(45) Veröffentlichungstag und Bekanntmachung des Hinweises auf die Patenterteilung: **21.06.2023**
(21) Anmeldenummer: 19809448.4
(22) Anmeldetag: 25.11.2019
(51) Int. Cl.: G01N 21/71, G01N 15/02, G01N 15/06, G01N 15/14, G01N 15/00

(54) **SENSOREINRICHTUNG ZUR DETEKTION VON PARTIKELN ODER AEROSOL IN EINEM STRÖMENDEN FLUID UNTER VERWENDUNG DES PRINZIPS DER LASERINDUZIERTEN INKANDESZENZ**
SENSOR DEVICE FOR DETECTING PARTICLES OR AN AEROSOL IN A FLOWING FLUID USING THE PRINCIPLE OF LASER-INDUCED INCANDESCENCE
DISPOSITIF CAPTEUR POUR LA DÉTECTION DE PARTICULES OU D'AÉROSOL DANS UN FLUIDE EN ÉCOULEMENT AU MOYEN DU PRINCIPE DE L'INCANDESCENCE INDUITE PAR LASER

(30) Priorität: 23.01.2019 DE 102019200775
(43) Veröffentlichungstag der Anmeldung: 01.12.2021
(73) Patentinhaber: Robert Bosch GmbH, 70442 Stuttgart (DE)
(72) Erfinder: RUSANOV, Radoslav, 70499 Stuttgart (DE); ROESENER, Benno, 70193 Stuttgart (DE); KNIES, Sonja, 71277 Rutesheim (DE)
(86) Internationale Anmeldenummer: PCT/EP2019/082362
(87) Internationale Veröffentlichungsnummer: WO 2020/151853

(56) Entgegenhaltungen:
- GB-A- 2 459 452
- US-B2- 6 700 662
- US-B2- 9 851 292
- Grimm Aerosol: "Portable Laser Aerosolspectrometer and Dust Monitor Model 1.108/1.109", , 26. August 2018 (2018-08-26), XP002796822, Gefunden im Internet: URL:https://www.wmo-gaw-wcc-aerosol-physic s.org/files/opc-grimm-model--1.108-and-1.1 09.pdf [gefunden am 2020-01-10]

## Beschreibung

### Stand der Technik

Die Erfindung betrifft eine Sensoreinrichtung zur Detektion von Partikeln oder Aerosol in einem strömenden Fluid unter Verwendung des Prinzips der laserinduzierten Inkandeszenz nach dem Oberbegriff des Anspruchs 1.

Aus der DE 10 2017 207 402 A1 ist eine Sensoreinrichtung zur Detektion von Partikeln in einem Fluid führenden Bereich unter Verwendung des Prinzips der laserinduzierten Inkandeszenz in Form eines Partikelsensors bekannt. Dabei werden in einem Abgas führenden Bereich vorhandene Partikel, beispielsweise Rußpartikel, mit einem auf einen Laserlicht-Spot fokussierten Laserlicht auf mehrere Tausend Grad Celsius erhitzt, so dass sie signifikant Wärme- bzw. Temperaturstrahlung emittieren. Diese thermisch induzierte Lichtemission der Partikel wird mit einem Lichtdetektor gemessen, der ein der gemessenen Lichtintensität entsorechendes Ausgangssignal bereitstellt.

Aus der US 6 700 662 B2 ist eine weitere Sensoreinrichtung zur Detektion von Partikeln in einem Fluid führenden Bereich unter Verwendung des Prinzips der laserinduzierten Inkandeszenz bekannt, wobei verschiedene Abschnitte an einem gemeinsamen Träger angeordnet sind.

### Offenbarung der Erfindung

Das der Erfindung zugrunde liegende Problem wird gelöst durch eine Sensoreinrichtung mit den Merkmalen des Anspruchs 1. Vorteilhafte Weiterbildungen sind in den abhängigen Ansprüchen angegeben.

Gemäß der Erfindung sind zumindest einige der optischen, elektronischen und/oder opto-elektronischen Komponenten der Sensoreinrichtung auf einem gemeinsamen Träger ("Substrat") montiert und zueinander justiert. Ziel ist es dabei, eine möglichst große Anzahl dieser Komponenten auf dem gemeinsamen Träger anzuordnen, dort zu befestigen und somit ein integrales Teil bzw. einen "optischen Block" zu schaffen. Insbesondere sind die optischen Elemente, die zur Lichtformung erforderlich sind, wie beispielsweise Spiegel, Linsen, Strahlteiler, etc., auf dem gleichen Träger befestigt. Dies vereinfacht in erheblichem Umfang den Aufbau der Sensoreinrichtung, wodurch auch die Justage vereinfacht wird. Diese kann beispielsweise während der Herstellung und der Befestigung der Komponenten, beispielsweise durch Kleben, aktiv erfolgen. Die Komponenten des besagten "optischen Blocks" sind also zueinander justiert. Insgesamt wird somit die Sensortopologie vereinfacht. Hierdurch werden auch die Herstellungskosten reduziert, da unter anderem auch kleinere optische Elemente verwendet werden können. Auch wird die mechanische und die thermische Stabilität der Sensoreinrichtung verbessert.

Erreicht wird dies alles durch eine Sensoreinrichtung zur Detektion von Partikeln oder Aerosol in einem strömenden Fluid unter Verwendung des Prinzips der laserinduzierten Inkandeszenz (LII). Dabei sei an dieser Stelle darauf hingewiesen, dass als Partikel insbesondere Rußpartikel und als Fluid insbesondere das Abgas einer Verbrennungsanlage oder Brennkraftmaschine infrage kommen. Die Vorrichtung kann beispielhaft zur Zustandsüberwachung eines Partikelfilters bei Benzin- oder Dieselfahrzeugen eingesetzt werden. Grundsätzlich eignet sich die Vorrichtung jedoch zur Detektion ganz allgemein von Partikeln und Aerosolen in jeglichem Fluid. Beispielsweise ist eine Verwendung der Vorrichtung für andere Szenarien und Einsatzbereiche denkbar (z.B. bei Portable Emission Monitoring Systemen, Messung der Raumluftqualität, Emissionen von Verbrennungsanlagen). Das Konzept ermöglicht sowohl die Bestimmung der Massen- (mg/m³ bzw. mg/mi) als auch der Anzahlkonzentration (Partikel/m³ oder Partikel/mi) der Partikel. Auch eine Messung der Partikelgrößenverteilung wird möglich.

Bei dem Prinzip der laserinduzierten Inkandeszenz wird zunächst mit Laserlicht, welches von einer Einrichtung, beispielsweise einem Laser, erzeugt wird und in einem Laserlicht-Spot, also einem Volumenbereich mit kleinsten Abmessungen im µm-Bereich, mit genügend hoher Intensität gebündelt ist, ein Partikel durch teilweise Absorption des Laserlichts auf mehrere tausend Grad erhitzt. Dieser heiße Partikel gibt nach dem Planck'schen Strahlungsgesetz eine charakteristische Temperaturstrahlung ab (Inkandeszenz bzw. Glühemission), welche als Messsignal dient und mit einer Einrichtung, beispielsweise einem Detektor, erfasst wird.

Zu diesem Zweck wird beispielsweise ein im Strahlengang des Lasers angeordnetes optisches Element (beispielsweise in Form einer Fokussierlinse) verwendet, das dazu ausgebildet und eingerichtet ist, das von dem Laser ausgehende Laserlicht in dem sehr kleinen Laserlicht-Spot zu bündeln. Bei einem Fokusdurchmesser von z.B. 10 µm kann davon ausgegangen werden, dass zu einem gegebenen Zeitpunkt immer nur ein Partikel den Laserlicht-Spot durchfliegt (intrinsische Einzelpartikel-Detektierbarkeit), wenn man eine Partikelkonzentration von 10¹³/m³ zu Grunde legt. Der Detektor ist so eingerichtet und angeordnet, dass er die vom Laserlicht-Spot ausgehende Temperaturstrahlung detektiert. Als Einrichtung zum Erzeugen von Laserlicht können beispielsweise kostengünstige Halbleiterlaserdioden eingesetzt werden. Die Detektion der Temperaturstrahlung kann z.B. mittels eines Multi-Pixel-Photon-Counters (MPPC) oder eines Silicon-Photon-Multipliers (SiPM) erfolgen.

Konkret umfasst die erfindungsgemäße Sensoreinrichtung eine erste Einrichtung zum Erzeugen von Laserlicht, beispielsweise in Form der oben erwähnten Laserdiode. Außerdem umfasst sie eine zweite Einrichtung zum Leiten des Laserlichts, wobei diese Einrichtung üblicherweise optische Komponenten beispielsweise in Form von Linsen und/oder Spiegeln aufweist. Zu der Sensoreinrichtung gehört ferner eine dritte Einrichtung zum Leiten der Temperaturstrahlung, die von einem durch das Laserlicht in dem oben erwähnten Spot erhitzten Partikel emittiert wird. Auch diese Einrichtung umfasst üblicherweise optische Komponenten beispielsweise in Form von Linsen und/oder Spiegeln. Schließlich gehört zu der erfindungsgemäßen Sensoreinrichtung noch eine vierte Einrichtung zum Erfassen der Temperaturstrahlung, üblicherweise in Form eines Detektors beispielsweise der oben genannten Arten, beispielsweise in der Form einer Fotodiode.

Bei der erfindungsgemäßen Sensoreinrichtung sind mindestens Abschnitte von mindestens zwei der ersten bis vierten Einrichtungen an einem gemeinsamen Träger und damit zueinander fest und in einem fixen Verhältnis in der Art eines "optischen Blocks" angeordnet. Dabei wird unter einem "gemeinsamen Träger" nicht verstanden, dass die jeweiligen Abschnitte der Einrichtungen auf irgend eine Art und Weise mechanisch zueinander festgelegt sind, beispielsweise in einem gemeinsamen Gehäuse aufgenommen sind. Als "gemeinsamer Träger" wird hier vorzugsweise ein einstückiges Element verstanden, an dem die jeweiligen Einrichtungen unmittelbar bzw. mittels entsprechender Befestigungseinrichtungen befestigt sind.

Erfindungsgemäß umfasst der Träger eine ebene Platte, nämlich ein PCB ("Printed Circuit Board") oder eine Keramikplatte. Wird ein PCB verwendet, können sehr einfach auch die elektronischen Komponenten der Sensoreinrichtung integriert werden. Dies ist insbesondere im Hinblick auf die erste Einrichtung und die vierte Einrichtung vorteilhaft. Wird ein planares Substrat aus einem Keramikmaterial verwendet, hat dies Vorteile im Hinblick auf die Wärmeleitung, da Keramik ein guter Isolator ist und darüber hinaus auch hohe Temperaturen zuverlässig erträgt.

Bei einer Weiterbildung ist vorgesehen, dass die Sensoreinrichtung einen dem Fluid zugewandten ersten Bereich und einen von dem Fluid abgewandten zweiten Bereich aufweist, und das nur in dem zweiten Bereich angeordnete Abschnitte der ersten bis vierten Einrichtungen auf dem gemeinsamen Träger angeordnet sind. Der Träger ist also in dem von dem Fluid abgewandten zweiten Bereich angeordnet, der insbesondere dann, wenn es sich bei dem Fluid um das Abgas einer Verbrennungsanlage oder einer Brennkraftmaschine handelt, auch als "kalter" Bereich bezeichnet werden kann, da in ihm deutlich niedrigere Temperaturen herrschen als in dem dem (heißen) dem Fluid zugewandten ersten Bereich. Mit der Erfindung wird also eine hochintegrierte Ausführung dieses "kalten" Bereichs der Sensoreinrichtung geschaffen.

Bei einer Weiterbildung hierzu ist vorgesehen, dass der erste Bereich und der zweite Bereich durch eine Lichtleitereinrichtung, insbesondere eine Glasfaser, miteinander optisch gekoppelt sind. Die Verwendung einer solchen Lichtleitereinrichtung ist dank der erfindungsgemäßen Integration von Einrichtungen auf dem gemeinsamen Träger besonders einfach realisierbar, und eine solche Lichtleitereinrichtung gestattet eine nahezu verlustfreie Übertragung sowohl des Laserlichts als auch der Temperaturstrahlung und eine Anordnung der wesentlichen elektronischen und optischen Komponenten weit entfernt von dem oftmals thermisch und/oder chemisch hochbelasteten ersten Bereich. Hierdurch wird die mechanische und auch die thermische Stabilität der Sensoreinrichtung wesentlich verbessert.

Grundsätzlich denkbar ist aber auch, dass auf die Lichtleitereinrichtung verzichtet wird und das Laserlicht vom ersten Bereich direkt in den zweiten Bereich geleitet wird, und die Temperaturstrahlung direkt vom zweiten Bereich in den ersten Bereich geleitet wird. Hierdurch wird eine sehr kompakte Sensoreinrichtung mit einer sogenannten "Freistrahloptik" realisiert. Auch hier wäre es das Ziel, möglichst viele oder sogar alle optischen Komponenten der Sensoreinrichtung im zweiten "kalten" Bereich auf einem gemeinsamen Träger und somit als eine integrale und vergleichsweise große Komponente zu realisieren.

Bei einer Weiterbildung ist vorgesehen, dass der Träger mindestens eine Öffnung aufweist, durch die das Laserlicht und/oder die Temperaturstrahlung hindurchtritt. Hierdurch wird erreicht, dass beide Seiten des Trägers für die Anordnung von optischen und/oder elektronischen Komponenten genutzt werden können, wodurch eine besonders kompakte Anordnung der Einrichtungen zueinander möglich wird.

Bei einer Weiterbildung hierzu ist vorgesehen, dass die zweite Einrichtung und die dritte Einrichtung mindestens eine gemeinsame Komponente in Form eines Strahlteilers umfassen, der in einer Öffnung des gemeinsamen Trägers so angeordnet ist, dass die Temperaturstrahlung oder das Laserlicht durch ihn und die Öffnung hindurchtritt. Ein solcher Strahlteiler kann beispielsweise in Form eines dichroitischen Spiegels realisiert sein. Durch ihn wird es möglich, zumindest bereichsweise einen gemeinsamen Strahlengang sowohl für das Laserlicht als auch für die Temperaturstrahlung vorzusehen, wodurch die Sensoreinrichtung besonders kompakt aufgebaut ist, und dennoch bereichsweise, nämlich zwischen der ersten Einrichtung und dem Strahlteiler und der vierten Einrichtung und dem Strahlteiler, getrennte Strahlengänge für das Laserlicht und die Temperaturstrahlung zu realisieren. Durch die Anordnung des Strahlteilers in einer Öffnung des gemeinsamen Trägers wird dieser vergleichsweise geschützt angeordnet, wodurch die mechanische Stabilität der Sensoreinrichtung verbessert wird.

Bei einer Weiterbildung ist vorgesehen, dass die erste Einrichtung, beispielsweise eine Laserdiode, und/oder die vierte Einrichtung, beispielsweise ein Detektor beispielsweise in Form eines Multi-Pixel-Photon-Counters (MPPC) oder eines Silicon-Photon-Multipliers (SiPM), auf oder wenigstens bereichsweise in dem gemeinsamen Träger angeordnet sind. Insbesondere, jedoch nicht ausschließlich im Zusammenhang mit einer erfindungsgemäßen Realisierung des Trägers durch ein PCB kann die elektrische Ansteuerung bzw. Signalableitung in oder an dem gemeinsamen Träger realisiert werden, wodurch die Herstellkosten gesenkt und die Robustheit der Sensoreinrichtung nochmals verbessert werden.

Bei einer Weiterbildung ist vorgesehen, dass die erste Einrichtung und die vierte Einrichtung an entgegengesetzten Enden des Trägers angeordnet sind. Gegenseitige Beeinflussungen werden auf diese Weise ausgeschlossen oder zumindest deutlich reduziert.

Bei einer Alternative hierzu ist vorgesehen, dass die erste Einrichtung und die vierte Einrichtung zueinander benachbart auf entgegengesetzten Seiten des Trägers angeordnet sind. Auf diese Weise werden die elektronischen Komponenten der Sensoreinrichtung in einem bestimmten Bereich des gemeinsamen Trägers konzentriert, was Vorteile bei der Herstellung hat.

Bei einer Weiterbildung ist vorgesehen, dass die zweite und/oder die dritte Einrichtung mindestens einen an dem Träger angeordneten Spiegel umfassen, der das Laserlicht bzw. die Temperaturstrahlung umlenkt, wobei der Spiegel vorzugsweise ein Fokussierspiegel ist. Durch einen derartigen Spiegel wird eine einfache Leitung des Laserlichts und/oder der Temperaturstrahlung ermöglicht, und die Justierung eines solchen Spiegels kann sehr einfach bei der Montage, beispielsweise beim Verkleben des Spiegels am Substrat, erfolgen. Wenn der Spiegel ein Fokussierspiegel ist, erfüllt er zusätzlich noch die Funktion einer Fokussierlinse, so dass auf eine solche verzichtet werden kann, wodurch Kosten gespart werden und der notwendige Bauraum reduziert wird. Ein solcher Fokussierspiegel kann beispielsweise durch einen gekrümmten Spiegel realisiert sein.

Nachfolgend werden Ausführungsformen der Erfindung unter Bezugnahme auf die beigefügte Zeichnung erläutert. In der Zeichnung zeigen:
- Figur 1: eine schematisierte Darstellung des Aufbaus einer Sensoreinrichtung zur Detektion von Partikeln in einem strömenden Fluid unter Verwendung des Prinzips der laserinduzierten Inkandeszenz;
- Figur 2: einen schematisierten Schnitt durch einen ersten Bereich und eine erste Ausführungsform eines zweiten Bereichs der Sensoreinrichtung von Figur 1;
- Figur 3: einen schematisierten Schnitt durch den ersten Bereich und eine zweite Ausführungsform des zweiten Bereichs der Sensoreinrichtung von Figur 1;
- Figur 4: einen schematisierten Schnitt durch den ersten Bereich und eine dritte Ausführungsform des zweiten Bereichs der Sensoreinrichtung von Figur 1; und
- Figur 5: eine schematisierte Darstellung einer Sensoreinrichtung mit dem zweiten Bereich von Figur 3.

Funktionsäquivalente Elemente und Bereiche tragen in der nachfolgenden Beschreibung auch in unterschiedlichen Figuren die gleichen Bezugszeichen und werden im allgemeinen nicht mehrfach erläutert.

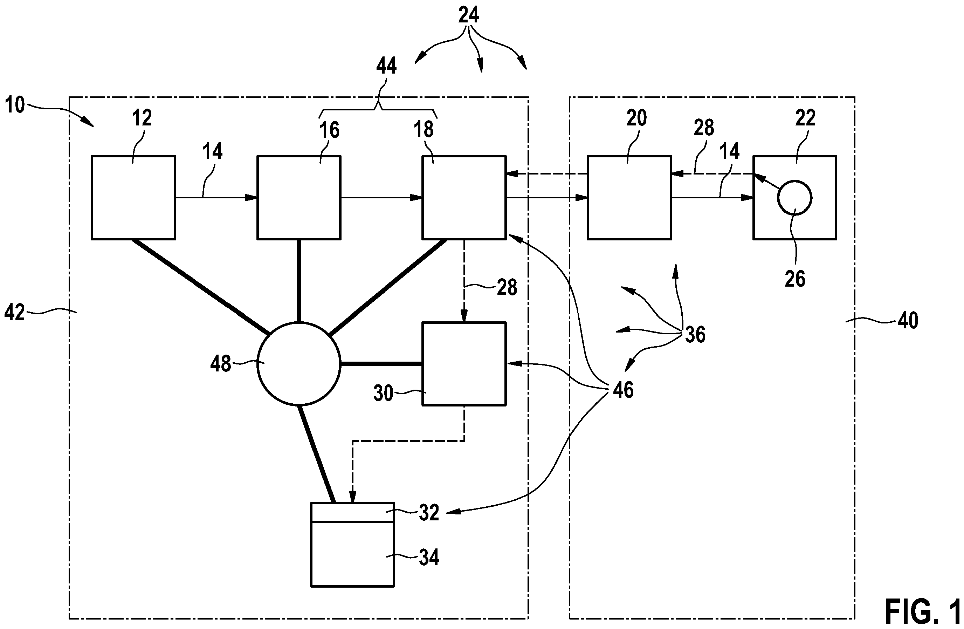

Figur 1 zeigt stark schematisiert einer Sensoreinrichtung 10 zur Detektion von Partikeln oder Aerosol in einem strömenden Fluid unter Verwendung des Prinzips der laserinduzierten Inkandeszenz, und zwar in Form eines Partikelsensors. Man erkennt zunächst eine erste Einrichtung 12 in Form eines Lasers, vorliegend beispielhaft einen CW-Laser (CW = continuous wave, also "Dauerstrich"), der Laserlicht 14 erzeugt bzw. emittiert. Die erste Einrichtung 12 kann insbesondere eine Laserdiode aufweisen, was sehr kostengünstig ist. Das Laserlicht 14 wird durch eine Kollimationseinrichtung 16 (beispielsweise eine Kollimationslinse oder einen Kollimationsspiegel) zunächst zu einem parallelen Strahl geformt, der durch einen Strahlteiler 18 beispielsweise in Form eines Beamsplitters oder eines dichroitischen Spiegels hindurchtritt. Von dort gelangt er zu einer Fokussiereinrichtung 20 und weiter in fokussierter Form zu einem Laserlicht-Spot 22 (nachfolgend kurz "Spot"). Als Spot 22 wird hier ein Volumenelement mit sehr kleinen Abmessungen im µm-Bereich oder sogar im 100nm-Bereich verstanden, in dem das Laserlicht 14 extrem fokussiert und somit extrem energiedicht bzw. intensiv ist. Die Kollimationseinrichtung 16, der Strahlteiler 18 und die Fokussiereinrichtung 20 sind Teil einer zweiten Einrichtung 24, mit der das Laserlicht 14 zum Spot 22 geleitet wird.

Laserlicht 14 hoher Intensität kann im Spot 22 auf einen dort vorhandenen Partikel 26 treffen, beispielsweise einen Rußpartikel 26 in einem Abgasstrom einer Brennkraftmaschine. Die Intensität des Laserlichts 14 ist im Spot 22 so hoch, dass die vom Partikel 26 absorbierte Energie des Laserlichtes 14 den Partikel 26 auf mehrere Tausend Grad Celsius erhitzt (nur im Volumen des Spots 22 erreicht die Intensität des Laserlichts 14 die für laserinduzierte Inkandeszenz (LII) notwendigen hohen Werte). Als Folge der Erhitzung emittiert der Partikel 26 spontan und im Wesentlichen ohne Vorzugsrichtung signifikant Temperaturstrahlung 28, auch als LII-Licht bezeichnet und in den Figuren durch gestrichelte Pfeile dargestellt. Ein Teil der Temperaturstrahlung 28 wird daher auch entgegengesetzt zur Richtung des einfallenden Laserlichtes 14 emittiert. Die Temperaturstrahlung 28 liegt zum Beispiel im nah-infraroten und sichtbaren Spektralbereich, ist jedoch nicht auf diesen Spektralbereich beschränkt.

Die Temperaturstrahlung 28 eines im Spot 22 durch das Laserlicht 14 angeregten Partikels 26 gelangt wiederum durch die Fokussiereinrichtung 20 zurück zum Strahlteiler 18, wo sie vorliegend beispielhaft (es sind auch andere Winkel möglich) um 90° abgelenkt wird, durch eine Fokussierlinse 30 hindurchtritt und durch einen Filter 32 (dieser ist nicht zwingend vorhanden) zu einem Detektor 34 gelangt. Die Fokussiereinrichtung 20, der Strahlteiler 18, die Fokussierlinse 30 und der Filter 32 gehören zu einer dritten Einrichtung 36, mit der die Temperaturstrahlung 28 vom Spot 22 zu dem Detektor 34 geleitet wird. Man erkennt, dass der Strahlteiler 18 und die Fokussiereinrichtung 20 sowohl zu der zweiten Einrichtung 24 als auch zu der dritten Einrichtung 36 gehören . Der Detektor 34 wiederum bildet eine "vierte Einrichtung zum Erfassen der Temperaturstrahlung 28". Der Filter 32 ist so ausgebildet, dass er die Wellenlängen des Laserlichts 14 zumindest weitgehend ausfiltert, welches in geringem Umfang ebenfalls zurückgestrahlt wird. Durch den Filter 32 wird also der störende Background reduziert. Denkbar ist auch die Verwendung eines einfachen Kantenfilters. Das Signal-to-Noise-Ratio verbessert sich dadurch.

Die Abmessungen des Spots 22 liegen im Bereich einiger µm, insbesondere im Bereich von höchstens 200 µm, so dass den Spot 22 durchquerende Partikel 26 zur Emission auswertbarer Strahlungsleistungen angeregt werden. Als Folge kann davon ausgegangen werden, dass sich stets höchstens ein Partikel 26 in dem Spot 22 befindet und dass ein momentanes Ausgangssignal der Sensoreinrichtung 10 nur von diesem höchstens einen Partikel 26 stammt.

Der Detektor 34 umfasst bevorzugt einen Multi-Pixel-Photon-Counter (MPPC) oder einen Silicon-Photon-Multiplier (SiPM) oder eine SPAD-Diode (singlephoton avalanche diode), welche(r) die Temperaturstrahlung 28 erfasst und ein entsprechendes Ausgangssignal erzeugt. Mit den oben genannten Typen von Detektoren 34 kann bereits ein von einem besonders kleinen Partikel 26 erzeugtes und daher extrem kleines Lichtsignal, dass beispielsweise von wenigen Photonen gebildet wird, detektiert werden. Damit sinken die Abmessungen von Partikeln 26, die gerade noch nachweisbar sind, auf eine untere Nachweisgrenze von bis zu 10 nm ab.

Es ist durchaus möglich, dass der Laser 12 moduliert bzw. an- und ausgeschaltet wird (duty cycle < 100%). Bevorzugt bleibt jedoch, dass der Laser 12 ein CW-Laser ist. Dies ermöglicht den Einsatz von kostengünstigen Halbleiter-Laser-Elementen (Laser-Dioden), was die komplette Sensoreinrichtung 10 verbilligt und die Ansteuerung des Lasers12 und die Auswertung des Ausgangssignals 34 stark vereinfacht. Die Verwendung gepulster Laser ist aber nicht ausgeschlossen.

Die Sensoreinrichtung 10 umfasst einen ersten Bereich 40, der durch einen strichpunktierten Kasten angedeutet ist, sowie einen zweiten Bereich 42, der ebenfalls durch einen strichpunktierten Kasten angedeutet ist. Der erste Bereich 40 ist zu dem Fluid, vorliegend beispielhaft dem Abgas der Brennkraftmaschine, in dem Partikel 26 detektiert werden sollen, zugewandt bzw. benachbart, wohingegen der zweite Bereich 42 von dem besagten Fluid abgewandt ist. Da das vorliegend beispielhaft genannte Abgas heiß ist, kann der erste Bereich 40 auch als heißer Bereich und kann der zweite Bereich 42 auch als kalter Bereich bezeichnet werden.

Man erkennt, dass die Fokussiereinrichtung 20, die sowohl zu der zweiten Einrichtung 24 als auch zu der dritten Einrichtung 36 gehört, einen Abschnitt dieser jeweiligen Einrichtungen 24 und 36 darstellt, der im ersten "heißen" Bereich 40 angeordnet ist, wohingegen alle anderen Komponenten im zweiten "kalten" Bereich 42 angeordnet sind. Insbesondere stellen die Kollimationseinrichtung 16 und der Strahlteiler 18 einen Abschnitt 44 der zweiten Einrichtung 24 dar, der in dem zweiten "kalten" Bereich 42 angeordnet ist, und der Strahlteiler 18, die Fokussierlinse 30 und der Filter 32 stellen einen Abschnitt 46 der dritten Einrichtung 36 dar, der ebenfalls in dem zweiten "kalten" Bereich 42 angeordnet ist. Bei anderen, hier nicht dargestellten Ausführungsformen können auch noch andere oder mehr oder weniger Komponenten zu den Abschnitten 44 und 46 gehören.

Aus Figur 1 ist schließlich noch ersichtlich, dass die erste Einrichtung 12 in Form des Lasers, der Abschnitt 44 der zweiten Einrichtung 24, der Abschnitt 46 der dritten Einrichtung 36 sowie die vierte Einrichtung 34 in Form des Detektors alle an einem einstückigen gemeinsamen Träger 48 angeordnet und an diesem fest und unverrückbar und final relativ zueinander justiert befestigt sind, beispielsweise durch Kleben. Dabei ist an dieser Stelle darauf hinzuweisen, dass der gemeinsame Träger 48 ganz unterschiedlich ausgebildet sein kann und die in Figur 1 gewählte Darstellung lediglich Symbolcharakter hat.

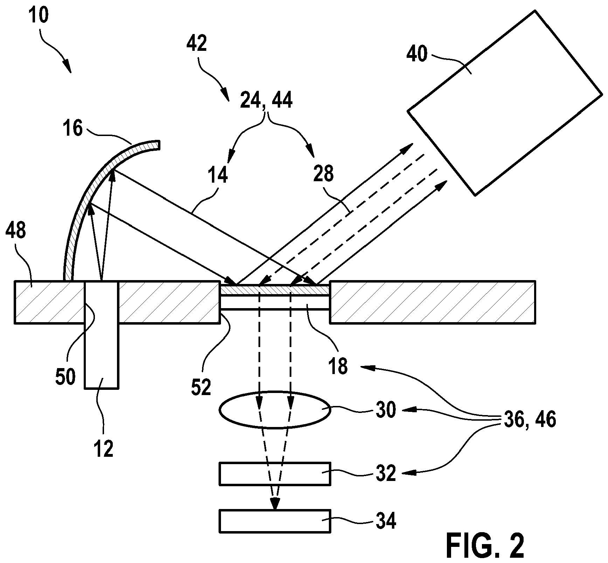

Nun wird auf Figur 2 Bezug genommen. Dort ist insbesondere der zweite Bereich 42 der Sensoreinrichtung 10 stärker im Detail dargestellt. Man erkennt, dass der gemeinsame Träger 48 eine einstückige ebene Platte umfasst, die erfindungsgemäß ein PCB ("Printed Circuit Board") oder eine Keramikplatte ist. Die erste Einrichtung 12 in Form des Lasers ist in eine erste Öffnung 50 im gemeinsamen Träger 48 eingesetzt, so dass das Laserlicht 14 im Wesentlichen orthogonal von dem gemeinsamen Träger 48 abgestrahlt wird. Als Fokussiereinrichtung 16 ist bei der Ausführungsform von Figur 2 ein gekrümmter Spiegel vorgesehen, der dafür sorgt, dass das Laserlicht 14 als paralleler Strahl zu dem Strahlteiler 18 gestrahlt wird. Dieser ist in eine zweite Öffnung 52 in den gemeinsamen Träger 48 eingesetzt, wobei der Strahlteiler 18 beispielsweise in Form eines dichroitischen Spiegels parallel zur Ebene des als ebene Platte ausgebildeten gemeinsamen Trägers 48 angeordnet ist.

Das Laserlicht 14 wird vom Strahlteiler 18 reflektiert und zum ersten "heißen" Bereich 40 geleitet. Dies kann unmittelbar geschehen, also ohne Zwischenschaltung beispielsweise eines Lichtleiters, wodurch ein so genannter "Kompaktsensor mit Freistrahl-Optik" geschaffen wird. Die Temperaturstrahlung 28 tritt dagegen durch den Strahlteiler 18 durch und wird weiter über die Fokussierlinse 30 und den Filter 32 zum Detektor 34 geleitet.

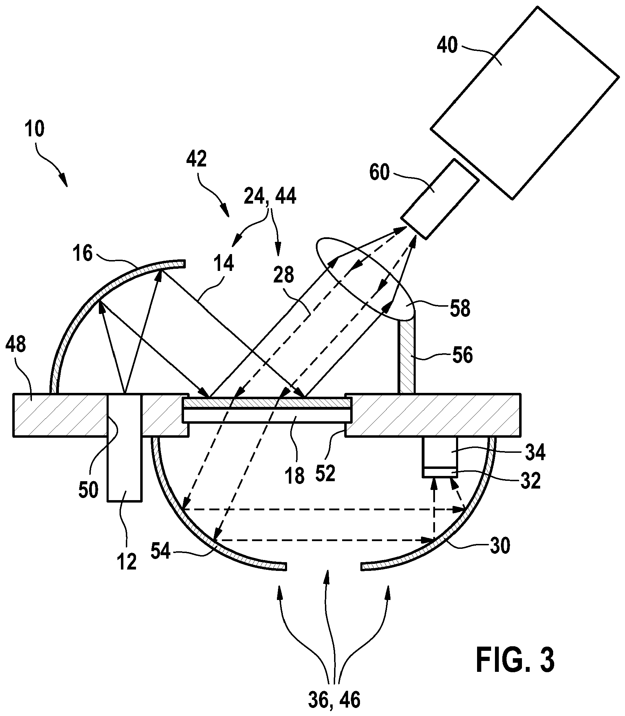

Bei der in Figur 3 dargestellten weiteren Ausführungsform sind an dem gemeinsamen Träger 48 nicht nur die erste Einrichtung 12, die zur zweiten Einrichtung 24 gehörende und durch einen Kollimationsspiegel ausgebildete Kollimationseinrichtung 16, und der sowohl zur zweiten Einrichtung 24 als auch zur dritten Einrichtung 36 gehörende Strahlteiler 18 angeordnet, sondern noch weitere Komponenten: so befindet sich beispielsweise auf der, bezogen auf die Darstellung von Figur 3, unteren Seite des gemeinsamen Trägers 48 ein gekrümmter Spiegel 54, der an dem gemeinsamen Träger 48 befestigt ist und der die durch den Strahlteiler 18 hindurch gelangende Temperaturstrahlung 28 in einer Richtung parallel zur Ebene des gemeinsamen Trägers 48 hin zu einem weiteren gekrümmten Spiegel reflektiert, der die Funktion der oben erwähnten Fokussierlinse 30 aufweist und der daher auch dieses Bezugszeichen trägt und als "Fokussierspiegel 30" bezeichnet werden kann. Der Fokussierspiegel 30 bündelt die Temperaturstrahlung 28 und richtet diese auf die aus Filter 32 und Detektor 34 (vierte Einrichtung) gebildete Einheit, die ebenfalls unmittelbar an der Unterseite des gemeinsamen Trägers 48 befestigt sind. Man erkennt, dass die erste Einrichtung 12 (Laser) und die vierte Einrichtung 34 (Detektor) an entgegengesetzten Enden des gemeinsamen Trägers 48 angeordnet sind.

Auf der Oberseite (wieder auf die Darstellung von Figur 3 bezogen) des gemeinsamen Trägers 48 ist über einen Halteabschnitt 56 eine Ein- und Auskoppellinse 58 an dem gemeinsamen Träger 48 befestigt, welche das Laserlicht 14 in eine Lichtleitereinrichtung 60, beispielsweise eine Glasfaser, einkoppelt, und welche die vom Partikel 26 im Spot 22 emittierte Temperaturstrahlung 28 aus der Lichtleitereinrichtung 60 auskoppelt. Somit sind alle im zweite "kalten" Bereich 42 befindlichen optischen und elektronischen Komponenten der Sensoreinrichtung 10 unmittelbar an dem beispielhaft als ebene Platte ausgebildeten gemeinsamen Träger 48 beispielsweise durch Kleben befestigt, wodurch eine feste, bereits final justierte Einheit geschaffen wird.

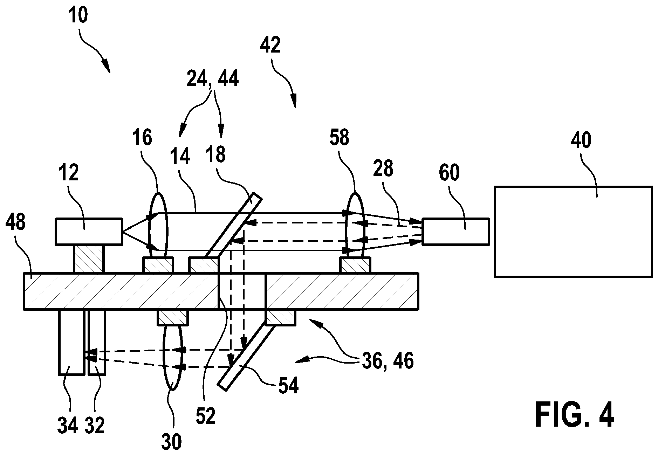

Eine weitere Ausführungsform zeigt Figur 4: bei dieser strahlt die erste Einrichtung 12 in Form des Lasers das Laserlicht 14 parallel zur Ebene des als ebene Platte ausgebildeten gemeinsamen Trägers 48, und der Strahlteiler 18 ist als zum gemeinsamen Träger 48 schräg angeordneter dichroitischen Spiegel ausgebildet. Durch diesen tritt das Laserlicht 14 ohne Richtungsänderung hindurch, wohingegen die Temperaturstrahlung 28 beispielhaft um einen Winkel von 90° in Figur 3 nach unten abgelenkt wird, durch die zweite Öffnung 52 hindurchtritt und auf einen dort befestigten geraden Spiegel 54 trifft, der die Temperaturstrahlung 28 durch eine Fokussierlinse 30 hindurch und parallel zur Ebene des gemeinsamen Trägers 48 zum Filter 32 und weiter zur vierten Einrichtung 34 bzw. zum Detektor leitet. Man erkennt, dass die erste Einrichtung 12 (Laser) und die vierte Einrichtung 34 (Detektor) zueinander benachbart, jedoch auf entgegengesetzten Seiten des gemeinsamen Trägers 48 angeordnet sind.

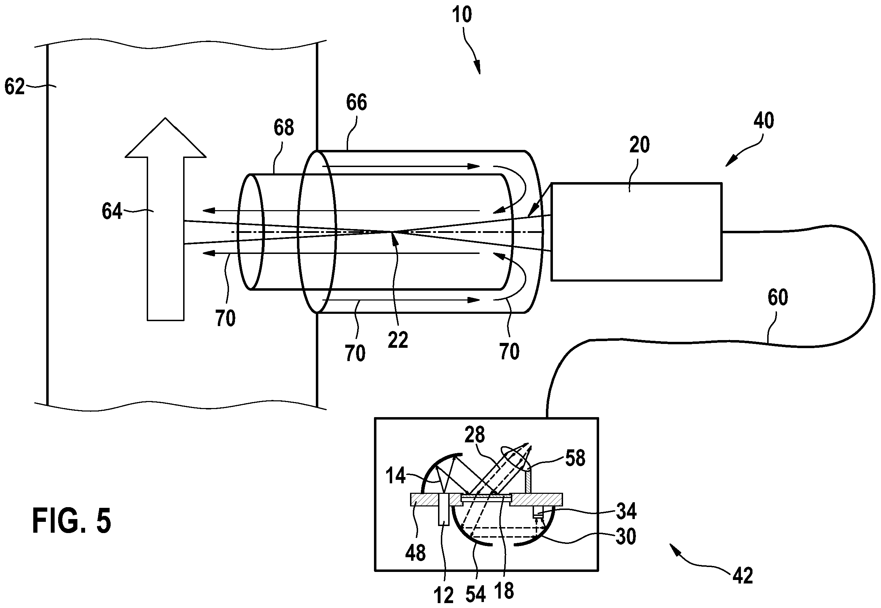

In Figur 5 ist der erste "heiße" Bereich 40 der Sensoreinrichtung 10 stärker im Detail dargestellt. Das in einem Abgasrohr 62 strömende Abgas wird durch einen Pfeil 64 symbolisiert. Das Abgas 64 wird bei einem Verbrennungsprozess erzeugt, und das Abgasrohr 62 kann beispielsweise zu einer Abgasanlage einer Brennkraftmaschine (Diesel oder Benzin oder jeder andere Kraftstoff) eines Kraftfahrzeugs gehören. Die Sensoreinrichtung 10 weist eine Anordnung aus einem äußeren Schutzrohr 66 und einem inneren Schutzrohr 68 auf. Die Achsen der Schutzrohre 66, 68 sind quer zur Strömung des Abgases 64 ausgerichtet. Das innere Schutzrohr 68 ragt in Richtung der Achsen über das äußere Schutzrohr 66 hinaus und in das strömende Abgas 64 hinein. An dem vom strömenden Abgas 64 abgewandten Ende der beiden Schutzrohre 66, 68 ragt das äußere Schutzrohr 66 über das innere Schutzrohr 68 hinaus. Die lichte Weite des äußeren Schutzrohrs 66 ist bevorzugt so viel größer als der äußere Durchmesser des inneren Schutzrohrs 68, dass sich zwischen den beiden Schutzrohren 66, 68 ein erster und vorliegend in etwa kreisringförmiger Strömungsquerschnitt ergibt. Die lichte Weite des inneren Schutzrohrs 68 bildet einen zweiten und vorliegend kreisförmigen Strömungsquerschnitt.

Diese Geometrie hat zur Folge, dass Abgas 64 über den ersten Strömungsquerschnitt in die Anordnung der beiden Schutzrohre 66, 68 eintritt, dann an dem vom Abgas 64 abgewandten Ende der Schutzrohre 66, 68 seine Richtung ändert, in das innere Schutzrohr 68 eintritt und aus diesem vom vorbeiströmenden Abgas 64 herausgesaugt wird (Pfeile mit dem Bezugszeichen 70). Dabei ergibt sich im inneren Schutzrohr 68 eine laminare Strömung, deren Strömungsrichtung im Normalfall parallel zu einer Längsachse des Laserlichts 14 ist. Diese Anordnung von Schutzrohren 66, 68 wird quer zur Strömungsrichtung des Abgases 64 an bzw. in dem Abgasrohr 62 befestigt. Der Spot 22 befindet sich im Inneren des inneren Schutzrohrs 68 im Bereich der laminaren Strömung 70.

## Patentansprüche

1. Sensoreinrichtung (10) zur Detektion von Partikeln (24) oder Aerosol in einem strömenden Fluid (36, 42) unter Verwendung des Prinzips der laserinduzierten Inkandeszenz, welche umfasst:
a) eine erste Einrichtung (12) zum Erzeugen von Laserlicht (14);
b) eine zweite Einrichtung (24) zum Leiten des Laserlichts (14);
c) eine dritte Einrichtung (36) zum Leiten von Temperaturstrahlung (28), die von einem durch das Laserlicht (14) erhitzten Partikel (26) emittiert wird,
d) eine vierte Einrichtung (34) zum Erfassen der Temperaturstrahlung (28),
**dadurch gekennzeichnet, dass** mindestens Abschnitte (44, 46) von mindestens zwei der ersten bis vierten Einrichtungen (12, 24, 36, 34) an einem gemeinsamen Träger (48) angeordnet sind, der eine ebene Platte umfasst, nämlich ein Printed Circuit Board (PCB) oder eine Keramikplatte.

2. Sensoreinrichtung (10) nach wenigstens einem der vorhergehenden Ansprüche, **dadurch gekennzeichnet, dass** sie einen dem Fluid (64) zugewandten erste Bereich (40) und einen von dem Fluid (64) abgewandten zweite Bereich (42) aufweist, und das nur in dem zweite Bereich (42) angeordnete Abschnitte (44, 46) der ersten bis vierten Einrichtungen (12, 24, 36, 34) auf dem gemeinsamen Träger (48) angeordnet sind.

3. Sensoreinrichtung (10) nach Anspruch 2, **dadurch gekennzeichnet, dass** der erste Bereich (40) und der zweite Bereich (42) durch eine Lichtleitereinrichtung (60), insbesondere eine Glasfaser, miteinander optisch gekoppelt sind.

4. Sensoreinrichtung (10) nach wenigstens einem der vorhergehenden Ansprüche, **dadurch gekennzeichnet, dass** der gemeinsame Träger (48) mindestens eine Öffnung (52) aufweist, durch die das Laserlicht (14) und/oder die Temperaturstrahlung (28) hindurchtritt.

5. Sensoreinrichtung (10) nach Anspruch 4, **dadurch gekennzeichnet, dass** die zweite Einrichtung (26) und die dritte Einrichtung (36) mindestens eine gemeinsame Komponente in Form eines Strahlteilers (18) umfassen, der in einer Öffnung (52) des gemeinsamen Trägers (48) so angeordnet ist, dass die Temperaturstrahlung (28) durch ihn und die Öffnung (52) hindurchtritt.

6. Sensoreinrichtung (10) nach wenigstens einem der vorhergehenden Ansprüche, dass die erste Einrichtung (12) und/oder die vierte Einrichtung (34) auf oder wenigstens bereichsweise in dem gemeinsamen Träger (48) angeordnet sind.

7. Sensoreinrichtung (10) nach Anspruch 6, dass die erste Einrichtung (12) und die vierte Einrichtung (34) an entgegengesetzten Enden des gemeinsamen Trägers (48) angeordnet sind.

8. Sensoreinrichtung nach Anspruch 6, dass die erste Einrichtung (12) und die vierte Einrichtung (34) zueinander benachbart auf entgegengesetzten Seiten des gemeinsamen Trägers (48) angeordnet sind.

9. Sensoreinrichtung (10) nach wenigstens einem der vorhergehenden Ansprüche, **dadurch gekennzeichnet, dass** die zweite (26) und/oder die dritte Einrichtung (36) mindestens einen an dem gemeinsamen Träger (48) angeordneten Spiegel (16, 54, 30) umfasst, der das Laserlicht (12) bzw. die Temperaturstrahlung (28) umlenkt, wobei der Spiegel vorzugsweise ein Fokussierspiegel (30) ist.

## Claims

1. Sensor device (10) for detecting particles (24) or an aerosol in a flowing fluid (36, 42) using the principle of laser-induced incandescence, said sensor device comprising:
a) a first device (12) for generating laser light (14) ;
b) a second device (24) for guiding the laser light (14) ;
c) a third device (36) for guiding thermal radiation (28) emitted by a particle (26) that is heated by the laser light (14),
d) a fourth device (34) for detecting the thermal radiation (28),
**characterized in that** at least portions (44, 46) of at least two of the first to fourth devices (12, 24, 36, 34) are arranged on a common carrier (48) comprising a planar board, namely a printed circuit board (PCB) or a ceramic board.

2. Sensor device (10) according to at least one of the preceding claims, **characterized in that** it has a first region (40) facing the fluid (64) and a second region (42) facing away from the fluid (64), and **in that** only portions (44, 46) of the first to fourth devices (12, 24, 36, 34) that are arranged in the second region (42) are arranged on the common carrier (48).

3. Sensor device (10) according to Claim 2, **characterized in that** the first region (40) and the second region (42) are optically coupled to one another by a light guide device (60), in particular an optical fibre.

4. Sensor device (10) according to at least one of the preceding claims, **characterized in that** the common carrier (48) has at least one opening (52) through which the laser light (14) and/or the thermal radiation (28) pass(es).

5. Sensor device (10) according to Claim 4, **characterized in that** the second device (26) and the third device (36) comprise at least one common component in the form of a beam splitter (18) arranged in an opening (52) of the common carrier (48) such that the thermal radiation (28) passes through it and the opening (52).

6. Sensor device (10) according to at least one of the preceding claims, in that the first device (12) and/or the fourth device (34) are/is arranged on or at least regionally in the common carrier (48).

7. Sensor device (10) according to Claim 6, in that the first device (12) and the fourth device (34) are arranged at opposite ends of the common carrier (48) .

8. Sensor device (10) according to Claim 6, in that the first device (12) and the fourth device (34) are arranged adjacent to one another on opposite sides of the common carrier (48).

9. Sensor device (10) according to at least one of the preceding claims, **characterized in that** the second device (26) and/or the third device (36) comprise(s) at least one mirror (16, 54, 30) which is arranged on the common carrier (48) and which deflects the laser light (12) and/or the thermal radiation (28), the mirror preferably being a focussing mirror (30).

## Revendications

1. Dispositif capteur (10) pour la détection de particules (24) ou d'aérosol dans un fluide en écoulement (36, 42) en utilisant le principe de l'incandescence induite par laser, comprenant :
a) un premier dispositif (12) servant à générer une lumière laser (14) ;
b) un deuxième dispositif (24) servant à guider la lumière laser (14) ;
c) un troisième dispositif (36) servant à guider une radiation thermique (28) qui est émise par une particule (26) chauffée par la lumière laser (14),
d) un quatrième dispositif (34) servant à détecter le rayonnement de température (28),
**caractérisé en ce qu'**au moins certaines parties (44, 46) d'au moins deux des premier à quatrième dispositifs (12, 24, 36, 34) sont disposées sur un support commun (48) qui comprend une platine plane, notamment une carte de circuits imprimés (PCB) ou une plaque de céramique.

2. Dispositif capteur (10) selon au moins l'une des revendications précédentes, **caractérisé en ce qu'**il présente une première zone (40) tournée vers le fluide (64) et une deuxième zone (42) détournée du fluide (64), et que seules des parties (44, 46) disposées dans la deuxième zone (42) des premier à quatrième dispositifs (12, 24, 36, 34) sont disposées sur le support commun (48).

3. Dispositif capteur (10) selon la revendication 2, **caractérisé en ce que** la première zone (40) et la deuxième zone (42) sont couplées optiquement l'une à l'autre par un dispositif de guide de lumière (60), en particulier par une fibre de verre.

4. Dispositif capteur (10) selon au moins l'une des revendications précédentes, **caractérisé en ce que** le support commun (48) présente au moins une ouverture (52) à travers laquelle passe(nt) la lumière laser (14) et/ou la radiation thermique (28).

5. Dispositif capteur (10) selon la revendication 4, **caractérisé en ce que** le deuxième dispositif (26) et le troisième dispositif (36) comprennent au moins un composant commun sous la forme d'un séparateur de faisceaux (18) qui est disposé dans une ouverture (52) du support commun (48) de telle sorte que la radiation thermique (28) passe à travers celui-ci et à travers l'ouverture (52).

6. Dispositif capteur (10) selon au moins l'une des revendications précédentes, en ce que le premier dispositif (12) et/ou le quatrième dispositif (34) sont disposés sur ou du moins par endroits dans le support commun (48).

7. Dispositif capteur (10) selon la revendication 6, en ce que le premier dispositif (12) et le quatrième dispositif (34) sont disposés à des extrémités opposées du support commun (48).

8. Dispositif capteur selon la revendication 6, en ce que le premier dispositif (12) et le quatrième dispositif (34) sont disposés de manière adjacente l'un à l'autre sur des côtés opposés du support commun (48).

9. Dispositif capteur (10) selon au moins l'une des revendications précédentes, **caractérisé en ce que** le deuxième (26) et/ou le troisième dispositif (36) comprennent au moins un miroir (16, 54, 30) disposé sur le support commun (48) et qui dévie la lumière laser (12) ou la radiation thermique (28), le miroir étant de préférence un miroir de focalisation (30).
